# EUROPEAN PATENT SPECIFICATION

(11) **EP 0 459 411 B1**
(45) Date of publication and mention of the grant of the patent: **17.01.1996**
(21) Application number: 91108717.9
(22) Date of filing: 28.05.1991
(51) Int. Cl.: G11B 5/716

(54) **Magnetic recording medium**
Magnetischer Aufzeichnungsträger
Milieu d'enregistrement magnétique

(30) Priority: 29.05.1990 JP 137137/90; 14.08.1990 JP 213701/90
(43) Date of publication of application: 04.12.1991
(73) Proprietor: Oki Electric Industry Company, Limited, Tokyo 105 (JP)
(72) Inventor: Yamane, Haruki, c/o Oki Electric Ind. Co.Ltd., Minato-ku, Tokyo (JP); Kobayashi, Masanobu, c/o Oki Electric Ind. Co.Ltd., Minato-ku, Tokyo (JP); Maeno, Yoshinori, c/o Oki Electric Ind. Co.Ltd., Minato-ku, Tokyo (JP); Sato, Kayoko, c/o Oki Electric Ind. Co.Ltd., Minato-ku, Tokyo (JP)
(74) Representative: Betten & Resch

(56) References cited:
- PATENT ABSTRACTS OF JAPAN, unexamined applications, P field, vol. 14, no. 183, April 12, 1990 THE PATENT OFFICE JAPANESE GOVERNMENT page 83 P 1035
- PATENT ABSTRACTS OF JAPAN, unexamined applications, E field, vol. 14, no. 248, May 28, 1990 THE PATENT OFFICE JAPANESE GOVERNMENT page 48 E 933
- PATENT ABSTRACTS OF JAPAN, unexamined applications, P field, vol. 15, no. 251, June 26, 1991 THE PATENT OFFICE JAPANESE GOVERNMENT page 51 P 1220
- PATENT ABSTRACTS OF JAPAN, unexamined applications, P field, vol. 15, no. 251, June 26, 1991 THE PATENT OFFICE JAPANESE GOVERNMENT page 59 P 1220

## Description

### BACKGROUND OF THE INVENTION

### Field of the Invention

The present invention relates to a magnetic recording medium suitable for forming a magnetic latent image.

### Description of the Prior Art

Conventionally, magnetic recording media are used, for example, by thermo-magnetic printers in which a magnetic latent image is formed on a magnetic recording medium, and the latent image is developed to a visible image (see, Shunji Imamura, "Magnetography Printer", Chapter 15, pp. 159-168, of "Nonimpact printing", CMC, Japan, 1986).

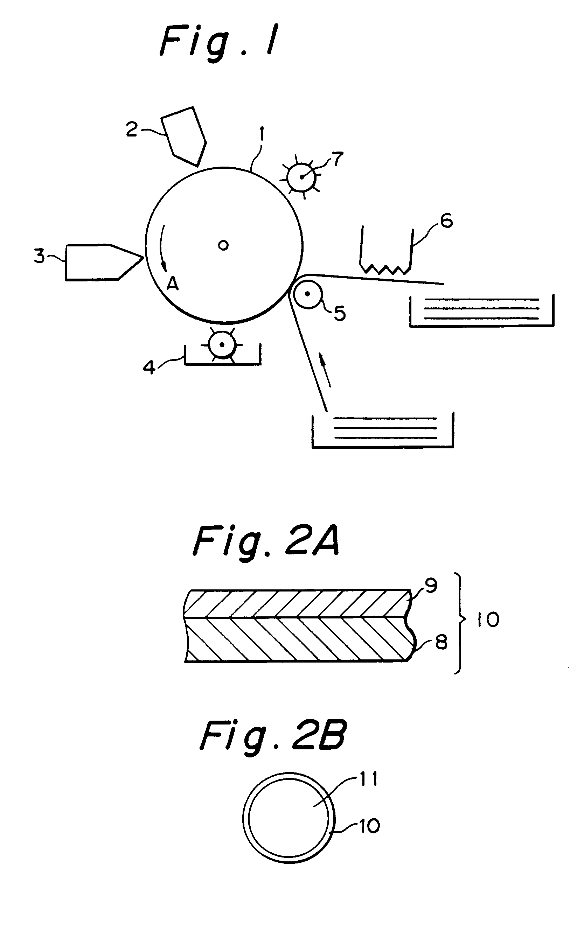

FIG. 1 is a schematic view illustrating the printing process of a conventional thermo-magnetic printer. In FIG. 1, a recording magnetic drum 1 rotates in the direction indicated by the arrow A. The recording magnetic drum 1 has on its surface a magnetic recording medium made from a CrO₂ thin film or the like for forming a magnetic latent image thereon.

In the printing process, an erasing means 2 initially magnetizes the magnetic recording medium in a predetermined direction. Then, a magnetic recording means 3 forms a designated magnetic latent image thereon, and a development means 4 processes the latent image into a visible image by making toners adhere to the surface of the drum 1 in response to the magnetic latent image. The toners adhere to portions at which magnetic forces produced by the leakage magnetic field on the surface of the magnetic recording medium intersect the surface of the magnetic recording medium. Thus, the magnetic latent image is developed to a visible image.

Following this, a transfer means 5 and a fixing means 6 transfers and fixes the visible image on paper, respectively. Finally, a cleaning means 7 removes remaining toners from the magnetic recording means, thus completing the printing process.

The magnetic latent image can be recorded on the magnetic recording medium by using a thermal head or by irradiating a laser beam to heat the recording medium. The magnetic recording medium can be magnetized in two different directions: one mainly along the surface of the recording medium (longitudinal recording method); and the other in the direction perpendicular to the surface of the recording medium (vertical recording method). The vertical recording method is used when a high resolution is required. Magnetic recording media for the vertical recording are formed with alloy films of elements of the rare earth family and iron family, that is, with RE-TM alloy films or Co-Cr alloy films. The RE-TM alloy films are mainly used for magneto-optical disks using a magnetic recording method, and the Co-Cr alloy films are mainly used for magnetic disks using a magnetic head recording method.

These days, thin films such as Co/Pt artificial superlattices or Co/Pd artificial superlattices can be used as vertical magnetization films to perform magnetic recording.

These magnetic recording media, however, have the following problems: the Co-Cr alloy films have high Curie points, and this makes it difficult to carry out the thermo-magnetic recording; the RE-TM alloy films, on the other hand, has small residual flux density, and this makes the adhesion of toners insufficient.

In addition, with regard to the Co/Pt artificial superlattices or Co/Pd artificial superlattices, although the squareness ratios of the magnetic hysteresis curve thereof are unity as long as the films are extremely thin of hundreds of angstroms, the squareness ratios decline below unity when the film thickness is thousands of angstroms, which gives only insufficient residual flux density for magnetic recording. In addition, the coercivity is small, about 200 Oe.

As described above, although the magnetic printers using vertical magnetization films for vertical recording can achieve, in their principle, reliable recording with a high resolution, and can operate with small power consumption, they have a problem that there is no appropriate materials for the vertical magnetization films.

Patent Abstracts of Japan, vol. 14, No. 183, page 83 P 1035, discloses a magneto-optical recording medium consisting of a Co-Pt artificial superlattice which is formed by alternately and periodically depositing on a substrate Co layers and Pt layers, and of a Co-Pd artificial superlattice which is formed by alternately and periodically depositing Co layers and Pd layers thereon.

Patent Abstracts of Japan, vol. 14, No. 248, page 48 E 933, discloses a perpendicularly magnetized film consisting of an oxide film (Co-O base film) and of a Co-Pt artificial superlattice which is formed by alternately and periodically depositing Co layers and Pt layers thereon.

### SUMMARY OF THE INVENTION

It is an object of the present invention to provide a magnetic recording medium for vertical recording which has a high residual flux density, a high coercivity, and a low Curie temperature, thereby eliminating the problem of the conventional magnetic recording medium.

According to a first aspect of the present invention, there is provided a magnetic recording medium according to claim 1.

Here, the artificial superlattice may comprise a Co layer whose thickness is in the range of 0.1 nm (1 angström) to 1.5 nm (15 angströms) inclusive, and a Pt layer whose thickness is in the range of 0.2 nm (2 angströms) to 3 nm (30 angströms) inclusive, and the metallic thin film is one selected from a group consisting of a Pt, a Pd and a Co thin film and may have a thickness in the range of 1 nm to 100 nm inclusive. The Pt and Pd thin films may have a thickness in the range of 15 nm to 100 nm inclusive, and the Co thin film may have a thickness in the range of 10 nm to 100 nm inclusive.

According to a second aspect of the present invention, there is provided a magnetic recording medium according to claim 4.

Here, the artificial superlattice may comprise a Co layer whose thickness is in the range of 0.1 nm (1 angström) to 1.5 nm (15 angströms) inclusive, and a Pd layer whose thickness is in the range of 0.2 nm (2 angströms) to 3 nm (30 angströms) inclusive, and the metallic thin film is one selected from a group consisting of a Pt, a Pd and a Co thin film and may have a thickness in the range of 1 nm to 100 nm inclusive. The Pt and Pd thin films may have a thickness in the range of 15 nm to 100 nm inclusive, and the Co thin film may have a thickness in the range of 10 nm to 100 nm inclusive.

According to the present invention, vertical magnetization films of lower Curie points, higher residual flux densities and higher coercivity can be obtained. By using the recording medium to thermo-magnetic printers, for example, a higher resolution and a smaller power consumption can be achieved.

### BRIEF DESCRIPTION OF THE DRAWINGS

The objects and features of the present invention will become more apparent from the consideration of the following detailed description taken in conjunction with the accompanying drawings in which:
FIG. 1 is a schematic view illustrating a printing process of a conventional thermo-magnetic printer;
FIGS. 2A and 2B show a magnetic recording medium of a first embodiment of the present invention, FIG. 2A is a cross sectional view of the magnetic recording medium, and FIG. 2B is a side view of a magnetic drum for the recording medium;
FIG. 3 is a cross sectional view showing a vertical magnetization film of the magnetic recording medium of first to fourth embodiments;
FIG. 4 is a schematic diagram showing a fabrication apparatus of the magnetic recording medium of the present invention, portion (A) is a front view of the apparatus, and portion (B) is a plan view of the apparatus;
FIGS. 5A and 5B are diagrams comparatively illustrating the Kerr loops of the first embodiment, FIG. 5A plots a Kerr loop of a vertical magnetization film formed by depositing a Co/Pt artificial superlattice on a stainless steel, and FIG. 5B plots a Kerr loop of the vertical magnetization film of the first embodiment which is composed of a multilayer film of the Co/Pt artificial superlattice and a Pt thin film;
FIGS. 6A and 6B are views showing a magnetic recording medium of a second embodiment of the present invention, FIG. 6A is a cross sectional view of the magnetic recording medium, and FIG. 6B is a side view of a magnetic drum for the recording medium;
FIGS. 7A and 7B are diagrams comparatively illustrating the Kerr loops of the second embodiment, FIG. 7A shows a Kerr loop of a vertical magnetization film formed by depositing a Co/Pd artificial superlattice on a stainless steel, and FIG. 7B shows a Kerr loop of the vertical magnetization film of the second embodiment which is composed of a multilayer film of the Co/Pd artificial superlattice and a Pd thin film;
FIGS. 8A and 8B are views showing a magnetic recording medium of a third embodiment of the present invention, FIG. 8A is a cross sectional view of the magnetic recording medium, and FIG. 8B is a side view of a magnetic drum for the recording medium;
FIGS. 9A and 9B are diagrams comparatively illustrating the Kerr loops of the third embodiment, FIG. 9A shows a Kerr loop of a vertical magnetization film formed by depositing a Co/Pt artificial superlattice on a stainless steel, and FIG. 9B shows a Kerr loop of the vertical magnetization film of the third embodiment which is composed of a multilayer film of the Co/Pt artificial superlattice and a Pd thin film;
FIGS. 10A and 10B are views showing a magnetic recording medium of a fourth embodiment of the present invention, FIG. 10A is a cross sectional view of the magnetic recording medium, and FIG. 10B is a side view of a magnetic drum for the recording medium;
FIGS. 11A and 11B are diagrams comparatively illustrating the Kerr loops of the fourth embodiment, FIG. 11A plots a Kerr loop of a vertical magnetization film formed by depositing a Co/Pd artificial superlattice on a stainless steel, and FIG. 11B plots a Kerr loop of the vertical magnetization film of the fourth embodiment which is composed of a multilayer film of the Co/Pd artificial superlattice and a Pt thin film;
FIGS. 12A and 12B are views showing a magnetic recording medium of a fifth embodiment of the present invention, FIG. 12A is a cross sectional view of the magnetic recording medium, and FIG. 12B is a side view of a magnetic drum for the recording medium;
FIG. 13 is a cross sectional view showing a vertical magnetization film of the magnetic recording medium of fifth and sixth embodiments;
FIGS. 14A and 14B are diagrams comparatively illustrating the Kerr loops of the fifth embodiment, FIG. 14A shows a Kerr loop of a vertical magnetization film formed by depositing a Co/Pt artificial superlattice on a stainless steel, and FIG. 14B shows a Kerr loop of the vertical magnetization film of the fifth embodiment which is composed of a multilayer film of the Co/Pt artificial superlattice and a Co thin film;
FIGS. 15A and 15B are views showing a magnetic recording medium of a sixth embodiment of the present invention, FIG. 15A is a cross sectional view of the magnetic recording medium, and FIG. 15B is a side view of a magnetic drum for the recording medium; and
FIGS. 16A and 16B are diagrams comparatively illustrating the Kerr loops of the sixth embodiment, FIG. 16A plots a Kerr loop of a vertical magnetization film formed by depositing a Co/Pd artificial superlattice on a stainless steel, and FIG. 16B plots a Kerr loop of the vertical magnetization film of the sixth embodiment which is composed of a multilayer film of the Co/Pd artificial superlattice and a Co thin film.

### DESCRIPTION OF THE PREFERRED EMBODIMENTS

### FIRST EMBODIMENT

In FIGS. 2A and 2B, a thermo-magnetic recording medium 10 is formed by depositing a vertical magnetization film on a freely bendable stainless steel substrate 8 tens to hundreds micrometers thick by using an RF (Radio Frequency) sputtering process. The vertical magnetization film is a multilayer film 9 hundreds of micrometers thick composed of Co/Pt artificial superlattices a few hundreds of angstroms thick, and Pt thin films tens to hundreds of angstroms thick, which are alternately deposited. The magnetic recording medium 10 is formed in a sheet, and is wound on a magnetic drum core material 11.

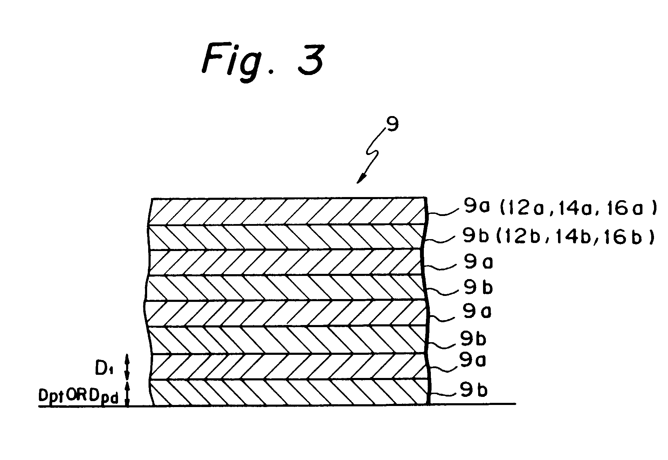

FIG. 3 is a cross sectional view of the multilayer film 9. In this figure, thickness d_{Co} of a Co layer constituting the Co/Pt artificial superlattice 9a is in the range of 0.1 nm (1 angström) to 1.5 nm (15 angström) inclusive, thickness d_{Pt} of a Pt layer constituting the Co/Pt artificial superlattice 9a is in the range of 0.2 nm (2 angströms) to 3 nm (30 angströms) inclusive, and thickness D_{Pt} of the Pt thin film 9b is in the range of 1 nm (10 angströms) to 100 nm (1,000 angströms) inclusive.

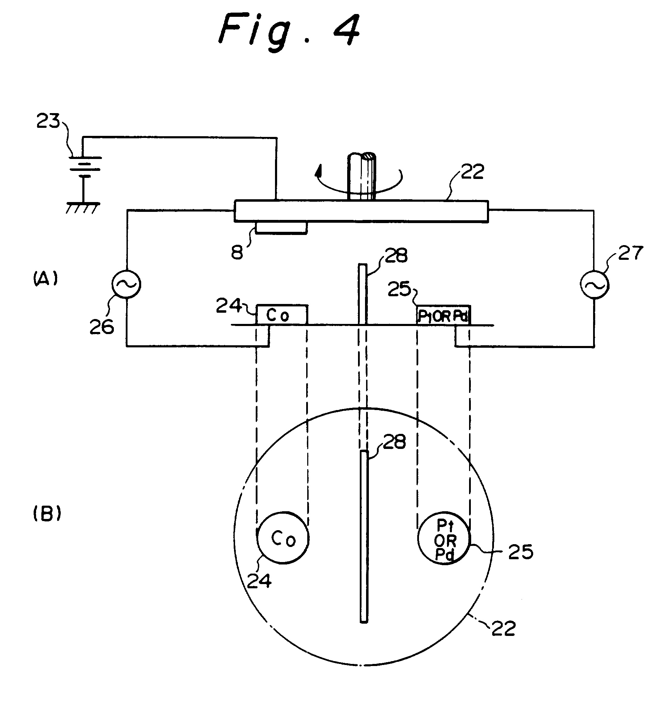

FIG. 4 includes a front view (A) and a plan view (B) of a fabrication apparatus of the magnetic recording medium of the present invention. In the figure, reference numeral 8 denotes a substrate which is disposed on a rotating plate 22, and on which the artificial superlattice is to be deposited by the sputtering process. Reference numeral 24 designates a Co target disposed opposite the substrate 8, and similarly reference numeral 25 denotes a Pt (or Pd) target disposed opposite the substrate 8.

Between the Co target 24 and the rotating plate 22, an RF power supply 26 for sputtering is connected, and likewise between the Pt (or Pd) target 25 and the rotating plate 22, an RF power supply 27 for sputtering is connected. In addition, between the Co target 24 and the Pt (or Pd) target 25, there is placed a partition board 28.

In this voltage applying type RF multiple sputtering apparatus thus arranged, the substrate 8 rotates above the Co target 24 and Pt (or Pd) target 25 with the rotation of the rotating plate 22 so that Pt (or Pd) and Co are periodically, alternately deposited, thereby forming the artificial superlattice 9a. Following that, the Pt thin film 9b is deposited. By repeating these procedures, the multilayer film 9 is formed.

Next, results of estimation of magnetic characteristics of the thermo-magnetic recording medium 10 will be described. In this estimation, the multilayer film 9 of the following arrangement is used: the Co/Pt artificial superlattice 9a the thickness D₁ of which is 15 nm (150 angströms) is formed by periodically, alternately depositing the Co layers the thickness d_{Co} of which is 0.2 nm (2 angströms), and the Pt layers the thickness d_{Pt} of which is 0.5 nm (5 angströms); the Pt thin film 9b is deposited so that its thickness D_{Pt} becomes 15 nm (150 angströms).

The thermo-magnetic recording medium 10 was estimated: the residual flux density was more than 1,000 Gauss, which presented a sufficient magnetic force for attracting magnetic toners; the Curie temperature was low, less than 200°C; and the coercivity was about 3,000 Oe.

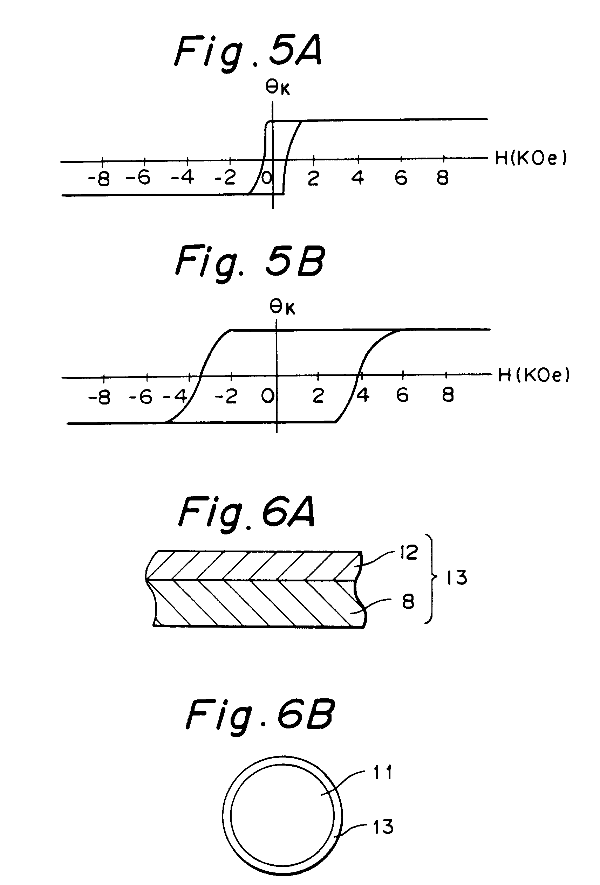

FIGS. 5A and 5B are diagrams comparatively illustrating the Kerr loops of the first embodiment: FIG. 5A represents a Kerr loop of a vertical magnetization film formed by depositing a Co/Pt artificial superlattice on a stainless steel; and FIG. 5B represents a Kerr loop of the vertical magnetization film of the first embodiment which is composed of the multilayer film of the Co/Pt artificial superlattice and the Pt thin film. These figures show that the coercivity is greatly increased in the first embodiment.

Two other estimations gave similar results. In these estimations, there are used a first thermo-magnetic recording medium 10 having values d_{Co} = 0.1 nm (1 angström), d_{Pt} = 0.2 nm (2 angströms) and D_{Pt} = 1 nm (10 angströms), and a second thermo-magnetic recording medium 10 having values d_{Co} = 1.5 nm (15 angströms), d_{Pt} = 3 nm (30 angströms), and D_{Pt} = 100 nm (1,000 angströms).

### SECOND EMBODIMENT

FIGS. 6A and 6B show a thermo-magnetic recording medium of a second embodiment of the present invention: FIG. 6A is a cross sectional view of the thermo-magnetic recording medium; and FIG. 6B is a side sectional view of a magnetic drum for the recording medium.

In FIGS. 6A and 6B, a thermo-magnetic recording medium 13 is formed by depositing a vertical magnetization film on a freely bendable stainless steel substrate 8 tens to hundreds of micrometers thick by using an RF (Radio Frequency) sputtering process. The vertical magnetization film is a multilayer film 12 hundreds of micrometers thick composed of Co/Pd artificial superlattices 12a a few hundreds of angstroms thick, and Pd thin films 12b tens to hundreds of angstroms thick, which are alternately deposited as shown in FIG. 3. The thermo-magnetic recording medium 13 is formed in a sheet, and is wound on a magnetic drum core material 11.

Thickness d_{Co} of a Co layer constituting the Co/Pd artificial superlattice 12a is in the range of 0.1 nm (1 angström) to 1.5 nm (15 angströms) inclusive, thickness d_{Pd} of a Pd layer constituting the Co/Pd artificial superlattice 12a is in the range of 0.2 nm (2 angströms) to 3 nm (30 angströms) inclusive, and thickness D_{Pd} of the Pd thin film 12b is in the range of 1 nm (10 angströms) to 100 nm (1,000 angströms).

Next, results of estimation of magnetic characteristics of the thermo-magnetic recording medium 13 will be described. In this estimation, the multilayer film 12 of the following arrangement is used: the Co/Pd artificial superlattice 12a the thickness D₁ of which is 15 nm (150 angströms) is formed by periodically, alternately depositing the Co layers the thickness d_{Co} of which is 0.2 nm (2 angströms), and the Pd layers the thickness d_{Pd} of which is 0.5 nm (5 angströms); the Pd thin film 12b is deposited so that its thickness D_{Pd} becomes 15 nm (150 angströms).

The thermo-magnetic recording medium 13 was estimated: the residual flux density was more than 1,000 Gauss, which presented a sufficient magnetic force for attracting magnetic toners; the Curie temperature was low, less than 200°C; and the coercivity was about 3,000 Oe.

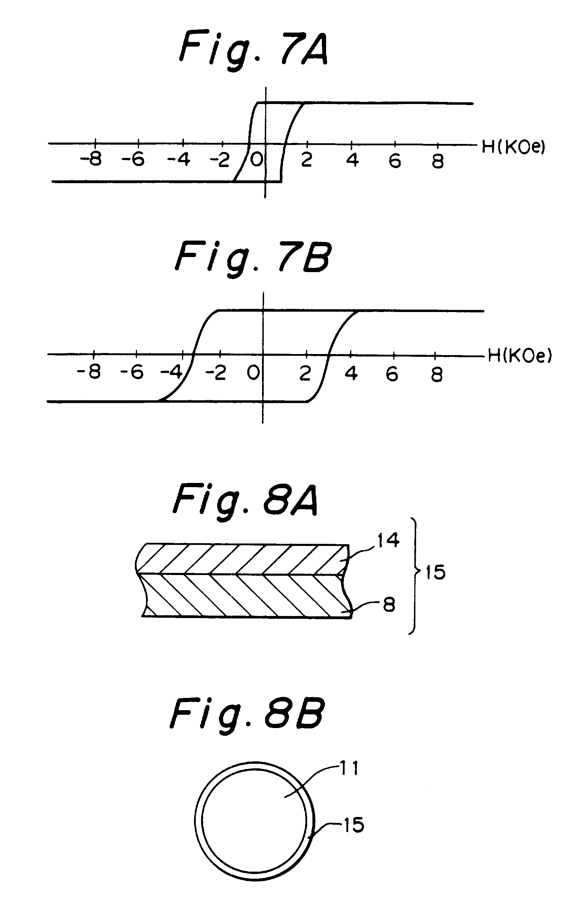

FIGS. 7A and 7B are diagrams comparatively illustrating the Kerr loops of the second embodiment: FIG. 7A depicts a Kerr loop of a vertical magnetization film formed by depositing a Co/Pd artificial superlattice on a stainless steel; and FIG. 7B depicts a Kerr loop of the vertical magnetization film of the second embodiment which is composed of the multilayer film of the Co/Pd artificial superlattice and the Pd thin film. These figures show that the coercivity is greatly increased in the second embodiment.

Two other estimations gave similar results. In these estimations, are used a first thermo-magnetic recording medium 13 having values d_{Co} = 0.1 nm (1 angström), d_{Pd} = 0.2 nm (2 angströms), and D_{Pd} = 1 nm (10 angströms), and a second thermo-magnetic recording medium 10 having values d_{Co} = 1.5 nm (15 angströms), d_{Pd} = 3 nm (30 angströms), and D_{Pd} = 100 nm (1,000 angströms).

### THIRD EMBODIMENT

FIGS. 8A and 8B show a thermo-magnetic recording medium of a third embodiment of the present invention: FIG. 8A is a cross sectional view of the thermo-magnetic recording medium; and FIG. 8B is a side view of a magnetic drum for the recording medium.

In FIGS. 8A and 8B, a thermo-magnetic recording medium 15 is formed by depositing a vertical magnetization film on a freely bendable stainless steel substrate 8 tens to hundreds of micrometers thick by using an RF (Radio Frequency) sputtering process. The vertical magnetization film is a multilayer film 14 hundreds of micrometers thick composed of Co/Pt artificial superlattices 14a a few angstroms thick, and Pd thin films 14b tens to hundreds of angstroms thick, which are alternately deposited as shown in FIG. 3. The thermo-magnetic recording medium 15 is formed in a sheet, and is wound on a magnetic drum core material 11.

Thickness d_{Co} of a Co layer constituting the Co/Pt artificial superlattice 14a is in the range of 0.1 nm (1 angström) to 1.5 nm (15 angströms) inclusive, thickness d_{Pt} of a Pt layer constituting the Co/Pt artificial superlattice 14a is in the range of 0.2 nm (2 angströms) to 3 nm (30 angströms) inclusive, and thickness D_{Pd} of the Pd thin film 14b is in the range of 1 nm (10 angströms) to 100 nm (1,000 angströms) inclusive.

Next, results of estimation of magnetic characteristics of the thermo-magnetic recording medium 15 will be described. In this estimation, the multilayer film 14 of the following arrangement is used: the Co/Pt artificial superlattice 14a the thickness D₁ of which is 15 nm (150 anströms) is formed by periodically, alternately depositing the Co layers the thickness d_{Co} of which is 0.2 nm (2 angströms), and the Pt layers the thickness d_{Pt} of which is 0.5 nm (5 angströms); the Pd thin film 14b is deposited so that its thickness D_{Pd} becomes 15 nm (150 angströms).

The thermo-magnetic recording medium 15 was estimated: the residual flux density was more than 1,000 Gauss, which presented a sufficient magnetic force for attracting magnetic toners; the Curie temperature was low, less than 200°C; and the coercivity was about 3,000 Oe.

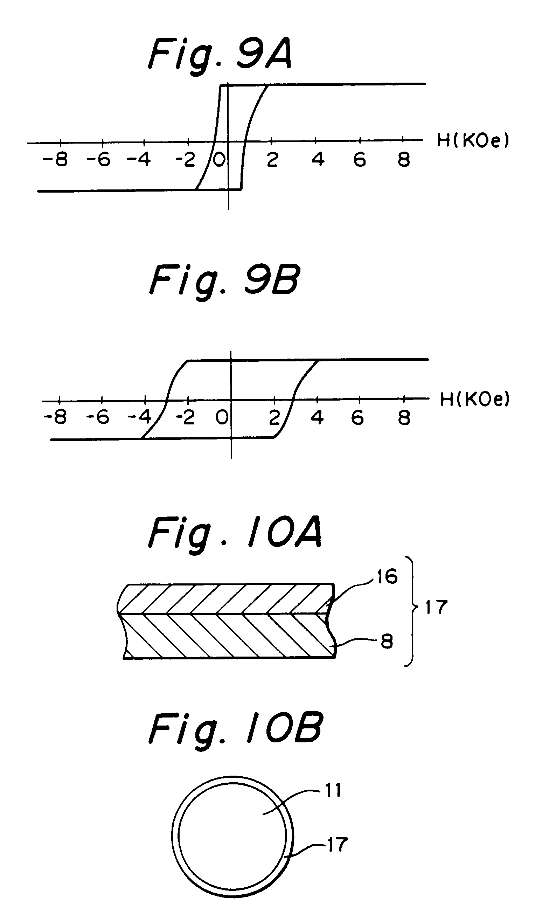

FIGS. 9A and 9B are diagrams comparatively illustrating the Kerr loops of the third embodiment: FIG. 9A plots a Kerr loop of a vertical magnetization film formed by depositing a Co/Pt artificial superlattice on a stainless steel; and FIG. 9B plots a Kerr loop of the vertical magnetization film of the third embodiment which is composed of the multilayer film of the Co/Pt artificial superlattice and the Pd thin film. These figures show that the coercivity is greatly increased in the third embodiment.

Two other estimations gave similar results. In these estimations, there are used a first thermo-magnetic recording medium 15 having values d_{Co} = 0.1 nm (1 angström), d_{Pt} = 0.2 nm (2 angströms), and D_{Pd} = 1 nm (10 angströms), and a second thermo-magnetic recording medium 15 having values d_{Co} = 1.5 nm (15 angströms), d_{Pt} = 3 nm (30 angströms), and D_{Pd} = 100 nm (1,000 angströms).

### FOURTH EMBODIMENT

FIGS. 10A and 10B show a thermo-magnetic recording medium of a fourth embodiment of the present invention: FIG. 10A is a cross sectional view of the thermo-magnetic recording medium; and FIG. 10B is a side view of a magnetic drum for the recording medium.

In FIGS. 10A and 10B, a thermo-magnetic recording medium 17 is formed by depositing a vertical magnetization film on a freely bendable stainless steel substrate 8 tens to hundreds of micrometers thick by using an RF (Radio Frequency) sputtering process. The vertical magnetization film is a multilayer film 16 hundreds of micrometers thick composed of Co/Pd artificial superlattices 16a a few hundreds of angstroms thick, and Pt thin films 16b tens to hundreds of angstroms thick, which are alternately deposited as shown in FIG. 3. The thermo-magnetic recording medium 17 is formed in a sheet, and is wound on a magnetic drum core material 11.

Thickness d_{Co} of a Co layer constituting the Co/Pd artificial superlattice 16a is in the range of 0.1 nm (1 angström) to 1.5 nm (15 angströms) inclusive, thickness d_{Pd} of a Pd layer constituting the Co/Pd artificial superlattice 16a is in the range of 0.2 nm (2 angströms) to 3 nm (30 angströms) inclusive, and thickness D_{Pt} of the Pt thin film 16b is in the range of 1 nm (10 angströms) to 100 nm (1,000 angströms) inclusive.

Next, results of estimation of magnetic characteristics of the thermo-magnetic recording medium 17 will be described. In this estimation, the multilayer film 16 of the following arrangement is used: the Co/Pd artificial superlattice 16a the thickness D₁ of which is 15 nm (150 angströms) is formed by periodically, alternately depositing the Co layers the thickness d_{Co} of which is 0.2 nm (2 angströms), and the Pd layers the thickness d_{Pd} of which is 0.5 nm (5 angströms); the Pt thin film 16b is deposited so that its thickness D_{Pt} becomes 15 nm (150 angströms).

The thermo-magnetic recording medium 17 was estimated: the residual flux density was more than 1,000 Gauss, which presented a sufficient magnetic force for attracting magnetic toners; the Curie temperature was low, less than 200°C; and the coercivity was about 3,000 Oe.

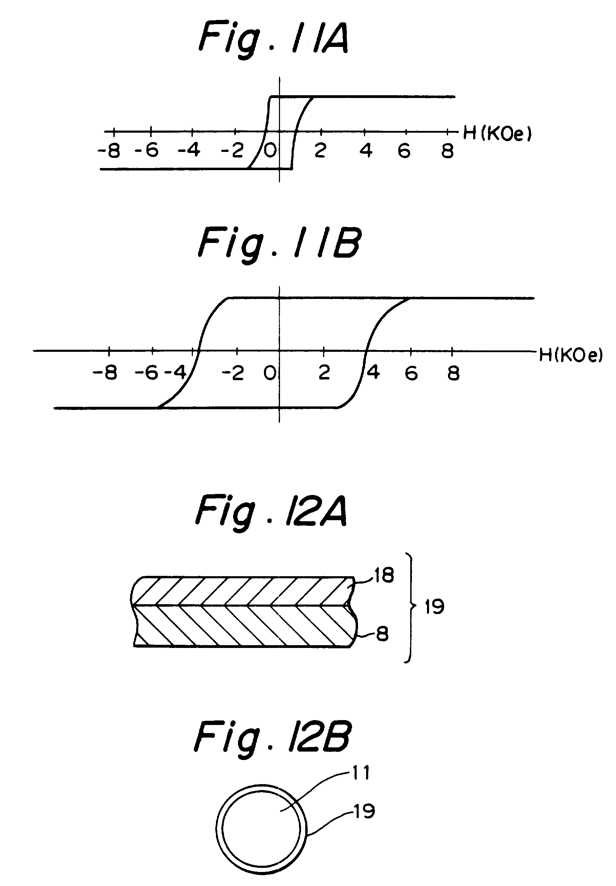

FIGS. 11A and 11B are diagrams comparatively illustrating the Kerr loops of the fourth embodiment: FIG. 11A shows a Kerr loop of a vertical magnetization film formed by depositing a Co/Pd artificial superlattice on a stainless steel; and FIG. 11B shows a Kerr loop of the vertical magnetization film of the fourth embodiment which is composed of the multilayer film of the Co/Pd artificial superlattice and the Pt thin film. These figures show that the coercivity is greatly increased in the fourth embodiment.

Two other estimations gave similar results. In these estimations, are used a first thermo-magnetic recording medium 17 having values d_{Co} = 0.1 nm (1 angström), d_{Pd} = 0.2 nm (2 angströms), and D_{Pt} = 1 nm (10 angströms), and a second thermo-magnetic recording medium 17 having values d_{Co} = 1,5 nm (15 angströms), d_{Pd} = 3 nm (30 angströms), and D_{Pt} = 100 nm (1,000 angströms).

### FIFTH EMBODIMENT

FIGS. 12A and 12B show a thermo-magnetic recording medium of a fifth embodiment of the present invention: FIG. 12A is a cross sectional view of the thermo-magnetic recording medium; and FIG. 12B is a side view of a magnetic drum for the recording medium.

In FIGS. 12A and 12B, a thermo-magnetic recording medium 19 is formed by depositing a vertical magnetization film on a freely bendable stainless steel substrate 8 tens to hundreds of micrometers thick by using an RF (Radio Frequency) sputtering process. The vertical magnetization film is a multilayer film 18 hundreds of micrometers thick composed of Co/Pt artificial superlattices 18a a few hundreds of angstroms thick, and Co thin films 18b tens to hundreds of angstroms thick, which are alternately deposited. The thermo-magnetic recording medium 19 is formed in a sheet, and is wound on a magnetic drum core material 11.

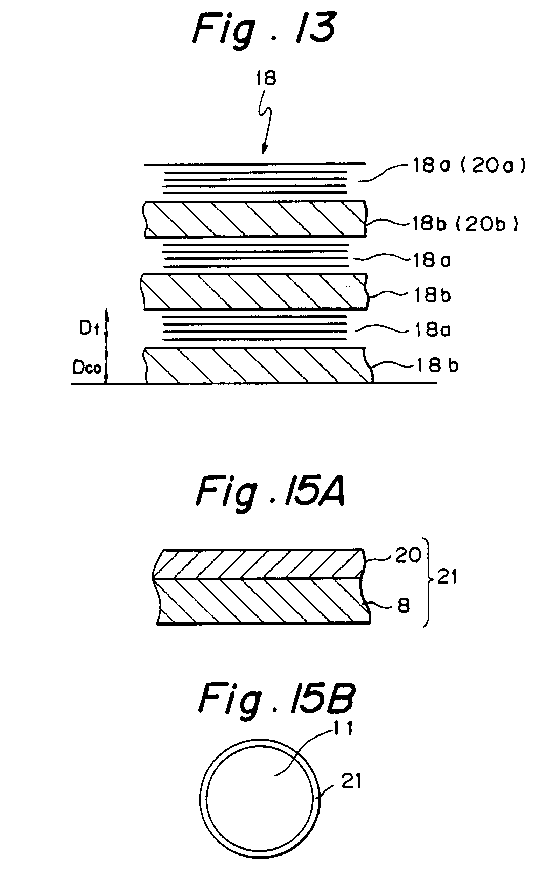

FIG. 13 is a cross sectional view of the multistructure multilayer film 18. In this figure, thickness d_{Co} of a Co layer constituting the Co/Pt artificial superlattice 18a is in the range of 0.1 nm (1 angström) to 1.5 nm (15 angströms) inclusive, thickness d_{Pt} of a Pt layer constituting the Co/Pt artificial superlattice 18a is in the range of 0.2 nm (2 angströms) to 3 nm (30 angströms) inclusive, and thickness D_{Co} of the Co thin film 18b is in the range of 1 nm (10 angströms) to 100 nm (1,000 angströms) inclusive.

Next, results of estimation of magnetic characteristics of the thermo-magnetic recording medium 19 will be described. In this estimation, the multilayer film 18 of the following arrangement is used: the Co/Pt artificial superlattice 18a the thickness D₁ of which is 15 nm (150 angströms) is formed by periodically, alternately depositing the Co layers the thickness d_{Co} of which is 0.5 nm (5 angströms), and the Pt layers the thickness d_{Pt} of which is 1.5 nm (15 angströms); the Co thin film 18b is deposited so that its thickness D_{Co} becomes 10 nm (100 angströms).

The thermo-magnetic recording medium 19 was estimated: the coercivity was about 2,000 Oe; the residual flux density was more than 1,000 Gauss, which presented a sufficient magnetic force for attracting magnetic toners; and the Curie temperature was low, less than 200°C.

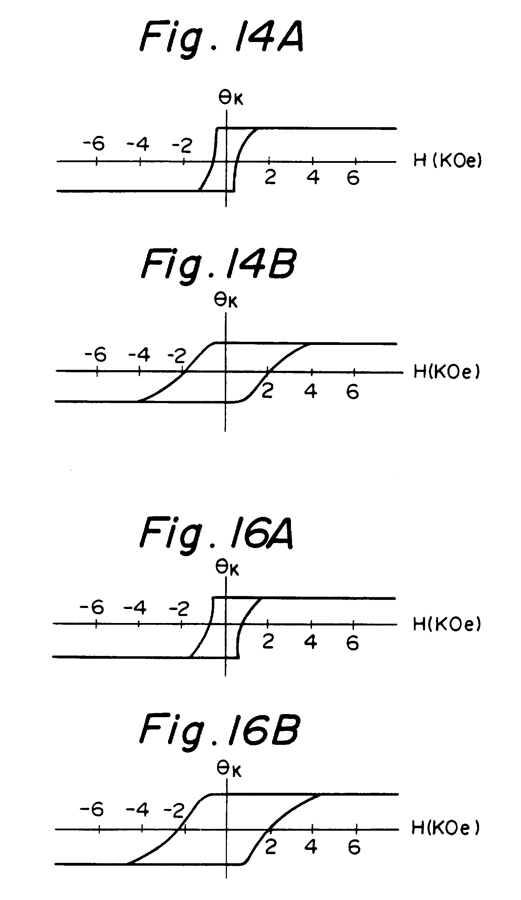

FIGS. 14A and 14B are diagrams comparatively illustrating the Kerr loops of the fourth embodiment: FIG. 14A plots a Kerr loop of a vertical magnetization film formed by depositing a Co/Pt artificial superlattice on a stainless steel; and FIG. 14B plots a Kerr loop of the vertical magnetization film of the fifth embodiment which is composed of the multilayer film of the Co/Pt artificial superlattice and the Co thin film. These figures show that the coercivity is greatly increased in the fifth embodiment.

Two other estimations gave similar results. In these estimations, are used a first thermo-magnetic recording medium 19 having values d_{Co} = 0.1 nm (1 angström), d_{Pt} = 0.2 nm (2 angströms), and D_{Co} = 1 nm (10 angströms), and a second thermo-magnetic recording medium 19 having values d_{Co} = 1.5 nm (15 angströms), d_{Pt} = 3 nm (30 angströms), and D_{Co} = 100 nm (1,000 angströms).

### SIXTH EMBODIMENT

FIGS. 15A and 15B show a thermo-magnetic recording medium of a sixth embodiment of the present invention: FIG. 15A is a cross sectional view of the thermo-magnetic recording medium; and FIG. 15B is a side view of a magnetic drum for the recording medium.

In FIGS. 15A and 15B, a thermo-magnetic recording medium 21 is formed by depositing a vertical magnetization film on a freely bendable stainless steel substrate 8 tens to hundreds of micrometers thick by using an RF (Radio Frequency) sputtering process. The vertical magnetization film is a multilayer film 20 hundreds of micrometers thick composed of Co/Pd artificial superlattices 20a a few hundreds of angstroms thick, and Co thin films 20b tens to hundreds of angstroms thick, which are alternately deposited as shown in FIG. 13. The thermo-magnetic recording medium 21 is formed in a sheet, and is wound on a magnetic drum core material 11.

Thickness d_{Co} of a Co layer constituting the Co/Pd artificial superlattice 20a is in the range of 0.1 nm (1 angström) to 1.5 nm (15 angströms) inclusive, thickness d_{Pd} of a Pd layer constituting the Co/Pd artificial superlattice 20a is in the range of 0.2 nm (2 angströms) to 3 nm (30 angströms) inclusive, and thickness D_{Co} of the Co thin film 20b is in the range of 1 nm (10 angströms) to 100 nm (1,000 angströms) inclusive.

Next, results of estimation of magnetic characteristics of the thermo-magnetic recording medium 21 will be described. In this estimation, the multilayer film 20 of the following arrangement is used: the Co/Pd artificial superlattice 20a the thickness D₁ of which is 15 nm (150 angströms) is formed by periodically, alternately depositing the Co layers the thickness d_{Co} of which is 0.5 nm (5 angströms), and the Pd layers the thickness d_{Pd} of which is 1.5 nm (15 angströms); the Co thin film 20b is deposited so that its thickness D_{Co} becomes 10 nm (100 angströms).

The thermo-magnetic recording medium 21 was estimated: the coercivity was about 2,000 Oe; the residual flux density was more than 1,000 Gauss, which presented a sufficient magnetic force for attracting magnetic toners; and the Curie temperature was low, less than 200°C.

FIGS. 16A and 16B are diagrams comparatively illustrating the Kerr loops of the fourth embodiment: FIG. 16A shows a Kerr loop of a vertical magnetization film formed by depositing a Co/Pd artificial superlattice on a stainless steel; and FIG. 16B shows a Kerr loop of the vertical magnetization film of the sixth embodiment which is composed of the multilayer film of the Co/Pd artificial superlattice and the Co thin film. These figures show that the coercivity is greatly increased in the sixth embodiment.

Two other estimations gave similar results. In these estimations, there are used a first thermo-magnetic recording medium 21 having values d_{Co} = 0.1 nm (1 angström), d_{Pd} = 0.2 nm (2 angströms), and D_{Co} = 1 nm (10 angströms), and a second thermo-magnetic recording medium 21 having values d_{Co} = 1.5 nm (15 angströms), d_{Pd} = 3 nm (30 angströms), and D_{Co} = 100 nm (1,000 angströms).

When a Co/Pt or Co/Pd artificial superlattice having the values d_{Co} = 0.2 nm (2 angströms), and d_{Pt} = 0.5 nm (5 angströms) or d_{Pd} = 0.5 nm (5 angströms) is used in connection with a Pt or Pd thin film having the value D_{Pt} < 1 nm (10 angströms) or D_{Pd} < 1 nm (10 angströms) as the thermo-magnetic recording medium, the coercivity thereof is less than 1,000 Oe, the squareness ratio of the magnetization hysteresis curve is less than unity, and the residual flux density is small.

In addition, a thermo-magnetic recording medium including a multilayer film having the value D_{Pt} > 100 nm (1,000 angströms) or D_{Pd} > 100 nm (1,000 angströms) gives small coercivity and residual flux density. Thus, this recording medium cannot be preferably used as a thermo-magnetic recording medium for thermo-magnetic printers.

Furthermore, when a Pt or Pd thin film having the value D_{Pt} = 15 nm (150 angströms) or D_{Pd} = 15 nm (150 angströms) in connection with a Co/Pt or Co/Pd artificial superlattice having the values d_{Co} < 0.1 nm (1 angström), and d_{Pt} < 0.2 nm (2 angströms) or d_{Pd} < 0.2 nm (2 angströms) is used as the multilayer film of the thermo-magnetic recording medium, the coercivity and residual flux density are small.

In addition, a thermo-magnetic recording medium including a multilayer film having a Co/Pt or Co/Pd artificial superlattice of the values d_{Co} > 1.5 nm (15 angströms) and d_{Pt} > 3 nm (30 angströms) or d_{Pd} > 3 nm (30 angströms) gives small coercivity and residual flux density. Thus, this recording medium cannot be preferably used as a thermo-magnetic recording medium for thermo-magnetic printers.

While the present invention has been described with reference to the particular illustrative embodiments, it is not to be restricted by those embodiments. It is to be appreciated that those skilled in the art can change or modify the embodiments without departing from the scope of the present invention. For example, although in the above embodiments, the stainless steel substrate 8 is used as a substrate of the magnetic recording media, a nonmagnetic polyimide resin substrate can be employed.

Furthermore, although the magnetic recording media are applied to the thermo-magnetic printer in the above examples, they can be applied to other recording apparatuses that carry out recording by using radiation of heat or light. In addition, although the vertical magnetization films were hundreds of micrometers thick, and the stainless steel substrate 8 was tens to hundreds of micrometers thick, thickness thereof can be changed depending on the application thereof.

## Claims

1. A magnetic recording medium having a substrate (8) and a vertical magnetization film (9, 14, 18) deposited on said substrate,
CHARACTERIZED IN THAT
said vertical magnetization film (9, 14, 18) is composed of a plurality of artificial superlattices (9a, 14a, 18a) and a plurality of metallic thin films (9b, 14b, 18b),
said vertical magnetization film (9, 14, 18) is formed by alternately and periodically depositing an artificial superlattice (9a, 14a, 18a) and a metallic thin film (9b, 14b, 18b) on each other,
each of said plurality of artificial superlattices (9a, 14a, 18a) is a Co/Pt artificial superlattice which is formed by alternately and periodically depositing a Co layer and a Pt layer on each other, and
said metallic thin film (9b, 14b, 18b) is one selected from a group consisting of a Pt, a Pd and a Co thin film,
wherein the thickness of each Co layer of said artificial superlattice (9a, 14a, 18a) is in the range of 0.1 nm to 1.5 nm inclusive, and the thickness of each Pt layer of said artificial superlattice (9a, 14a, 18a) is in the range of 0.2 nm to 3 nm inclusive, and
wherein each metallic thin film (9b, 14b, 18b) is thicker than each Co layer of said artificial superlattice (9a, 14a, 18a) and is thicker than each Pt layer of said artificial superlattice (9a, 14a, 18a).

2. A magnetic recording medium according to claim 1 CHARACTERIZED IN THAT the thickness of each metallic thin film (9b, 14b, 18b) is in the range of 1 nm to 100 nm inclusive.

3. A magnetic recording medium according to claim 2 CHARACTERIZED IN THAT said metallic thin film (9b, 14b, 18b) is a Pt thin film whose thickness is in the range of 15 nm to 100 nm inclusive, or is a Pd thin film whose thickness is in the range of 15 nm to 100 nm inclusive, or is a Co thin film whose thickness is in the range of 10 nm to 100 nm inclusive.

4. A magnetic recording medium having a substrate (8) and a vertical magnetization film (12, 16, 20) deposited on said substrate,
CHARACTERIZED IN THAT
said vertical magnetization film (12, 16, 20) is composed of a plurality of artificial superlattices (12a, 16a, 20a) and a plurality of metallic thin films,
said vertical magnetization film (12, 16, 20) is formed by alternately and periodically depositing an artificial superlattice (12a, 16a, 20a) and a metallic thin film (12b, 16b, 20b) on each other,
each of said plurality of artificial superlattices (12a, 16a, 20a) is a Co/Pd artificial superlattice which is formed by alternately and periodically depositing a Co layer and a Pd layer on each other, and
said metallic thin film (12b, 16b, 20b) is one selected from a group consisting of a Pt, a Pd and a Co thin film,
wherein the thickness of each Co layer of said artificial superlattice (12a, 16a, 20a) is in the range of 0.1 nm to 1.5 nm inclusive, and the thickness of each Pd layer of said artificial superlattice (12a, 16a, 20a) is in the range of 0.2 nm to 3 nm inclusive, and
wherein each metallic thin film (12b, 16b, 20b) is thicker than each Co layer of said artificial superlattice (12a, 16a, 20a) and is thicker than each Pd layer of said artificial superlattice (12a, 16a, 20a).

5. A magnetic recording medium according to claim 4 CHARACTERIZED IN THAT the thickness of each metallic thin film (12b, 16b, 20b) is in the range of 1 nm to 100 nm inclusive.

6. A magnetic recording medium according to claim 5 CHARACTERIZED IN THAT said metallic thin film (12b, 16b, 20b) is a Pt thin film whose thickness is in the range of 15 nm to 100 nm inclusive, or is a Pd thin film whose thickness is in the range of 15 nm to 100 nm inclusive, or is a Co thin film whose thickness is in the range of 10 nm to 100 nm inclusive.

## Patentansprüche

1. Magnetischer Aufzeichnungsträger mit einem Substrat (8) und einem Film für vertikale Magnetisierung (9, 14, 18), der auf das Substrat aufgebracht ist, dadurch gekennzeichnet, daß
der Film für vertikale Magnetisierung (9, 14, 18) aus einer Vielzahl von künstlichen Supergittern (9a, 14a, 18a) und einer Vielzahl von metallischen Dünnfilmen (9b, 14b, 18b) zusammengesetzt ist,
der Film für vertikale Magnetisierung (9, 14, 18) durch abwechselndes und periodisches Aufbringen eines künstlichen Supergitters (9a, 14a, 18a) und eines metallischen Dünnfilms (9b, 14b, 18b) aufeinander gebildet ist,
jedes aus der Vielzahl von künstlichen Supergittern (9a, 14a, 18a) ein künstliches Co/Pt-Supergitter ist, das durch abwechselndes und periodisches Aufbringen einer Co-Schicht und einer Pt-Schicht aufeinander gebildet ist, und
der metallische Dünnfilm (9b, 14b, 18b) ein solcher ist, der aus einer Gruppe ausgewählt ist, die aus einem Pt- einem Pd- und einem Co-Dünnfilm besteht,
wobei die Dicke jeder Co-Schicht des künstlichen Supergitters (9a, 14a, 18a) im Bereich von 0,1 nm bis 1,5 nm einschließlich liegt und die Dicke jeder Pt-Schicht des künstlichen Supergitters (9a, 14a, 18a) im Bereich von 0,2 nm bis 3 nm einschließlich liegt, und
wobei jeder metallische Dünnfilm (9b, 14b, 18b) dicker als jede Co-Schicht des künstlichen Supergitters (9a, 14a, 18a) ist und dicker als jede Pt-Schicht des künstlichen Supergitters (9a, 14a, 18a) ist.

2. Magnetischer Aufzeichnungsträger gemäß Anspruch 1, dadurch gekennzeichnet, daß die Dicke jedes metallischen Dünnfilms (9b, 14b, 18b) im Bereich von 1 nm bis 100 nm einschließlich liegt.

3. Magnetischer Aufzeichnungsträger gemäß Anspruch 2, dadurch gekennzeichnet, daß der metallische Dünnfilm (9b, 14b, 18b) ein Pt-Dünnfilm ist, dessen Dicke im Bereich von 15 nm bis 100 nm einschließlich liegt, oder ein Pd-Dünnfilm ist, dessen Dicke im Bereich von 15 nm bis 100 nm einschließlich liegt, oder ein Co-Dünnfilm ist, dessen Dicke im Bereich von 10 nm bis 100 nm einschließlich liegt.

4. Magnetischer Aufzeichnungsträger mit einem Substrat (8) und einem Film für vertikale Magnetisierung (12, 16, 20), der auf das Substrat aufgebracht ist, dadurch gekennzeichnet, daß
der Film für vertikale Magnetisierung (12, 16, 20) aus einer Vielzahl von künstlichen Supergittern (12a, 16a, 20a) und einer Vielzahl von metallischen Dünnfilmen zusammengesetzt ist,
der Film für vertikale Magnetisierung (12, 16, 20) durch abwechselndes und periodisches Aufbringen eines künstlichen Supergitters (12a, 16a, 20a) und eines metallischen Dünnfilms (12b, 16b, 20b) aufeinander gebildet ist,
jedes aus der Vielzahl von künstlichen Supergittern (12a, 16a, 20a) ein künstliches Co/Pd-Supergitter ist, das durch abwechselndes und periodisches Aufbringen einer Co-Schicht und einer Pd-Schicht aufeinander gebildet ist, und
der metallische Dünnfilm (12b, 16b, 20b) ein solcher ist, der aus einer Gruppe ausgewählt ist, die aus einem Pt- einem Pd- und einem Co-Dünnfilm besteht,
wobei die Dicke jeder Co-Schicht des künstlichen Supergitters (12a, 16a, 20a) im Bereich von 0,1 nm bis 1,5 nm einschließlich liegt und die Dicke jeder Pd-Schicht des künstlichen Supergitters (12a, 16a, 20a) im Bereich von 0,2 nm bis 3 nm einschließlich liegt, und
wobei jeder metallische Dünnfilm (12b, 16b, 20b) dicker als jede Co-Schicht des künstlichen Supergitters (12a, 16a, 20a) ist und dicker als jede Pd-Schicht des künstlichen Supergitters (12a, 16a, 20a) ist.

5. Magnetischer Aufzeichnungsträger gemäß Anspruch 4, dadurch gekennzeichnet, daß die Dicke jedes metallischen Dünnfilms (12b, 16b, 20b) im Bereich von 1 nm bis 100 nm einschließlich liegt.

6. Magnetischer Aufzeichnungsträger gemäß Anspruch 5, dadurch gekennzeichnet, daß der metallische Dünnfilm (12b, 16b, 20b) ein Pt-Dünnfilm ist, dessen Dicke im Bereich von 15 nm bis 100 nm einschließlich liegt, oder ein Pd-Dünnfilm ist, dessen Dicke im Bereich von 15 nm bis 100 nm einschließlich liegt, oder ein Co-Dünnfilm ist, dessen Dicke im Bereich von 10 nm bis 100 nm einschließlich liegt.

## Revendications

1. Support d'enregistrement magnétique ayant un substrat (8) et un film (9, 14, 18) à magnétisation verticale déposé sur ledit substrat,
caractérisé en ce que
ledit film (9, 14, 18) à magnétisation verticale est composé d'un ensemble de superréseaux (9a, 14a, 18a) artificiels et d'un ensemble de films (9b, 14b, 18b) métalliques minces,
ledit film (9, 14, 18) à magnétisation verticale est formé par dépôt alterné et périodique d'un superréseau (9a, 14a, 18a) artificiel et d'un film (9b, 14b, 18b) mince métallique l'un sur l'autre,
chacun dudit ensemble de superréseaux (9a, 14a, 18a) artificiels est un superréseau artificiel de Co/Pt qui est formé par dépôt alterné et périodique d'une couche de Co et d'une couche de Pt l'une sur l'autre, et
ledit film (9b, 14b, 18b) métallique mince est sélectionné dans un groupe constitué par des films minces de Pt, de Pd et de Co,
dans lequel l'épaisseur de chaque couche de Co dudit superréseau (9a, 14a, 18a) artificiel est dans la gamme de 0,1 nm à 1,5 nm inclus, et l'épaisseur de chaque couche de Pt dudit superréseau (9a, 14a, 18a) artificiel est dans la gamme de 0,2 nm à 3 nm inclus, et
dans lequel chaque film (9b, 14b, 18b) métallique mince est plus épais que chaque couche de Co dudit superréseau (9a, 14a, 18a) artificiel et est plus épais que chaque couche de Pt dudit superréseau (9a, 14a, 18a) artificiel.

2. Support d'enregistrement magnétique selon la revendication 1, caractérisé en ce que l'épaisseur de chaque film (9b, 14b, 18b) métallique mince est dans la gamme de 1 nm à 100 nm inclus.

3. Support d'enregistrement magnétique selon la revendication 2, caractérisé en ce que ledit film (9b, 14b, 18b) métallique mince est un film mince de Pt dont l'épaisseur est dans la gamme de 15 nm à 100 nm inclus, ou est un film mince de Pd dont l'épaisseur est dans la gamme de 15 nm à 100 nm inclus, ou est un film mince de Co dont l'épaisseur est dans la gamme de 10 nm à 100 nm inclus.

4. Support d'enregistrement magnétique ayant un substrat (8) et un film (12, 16, 20) à magnétisation verticale déposé sur ledit substrat,
caractérisé en ce que
ledit film (12, 16, 20) à magnétisation verticale est composé d'un ensemble de superréseaux (12a, 16a, 20a) artificiels, et d'un ensemble de films métalliques minces,
ledit film (12, 16, 20) à magnétisation verticale est formé par dépôt alterné et périodique d'un superréseau (12a, 16a, 20a) artificiel et d'un film (12b, 16b, 20b) mince métallique l'un sur l'autre,
chacun dudit ensemble de superréseaux (12a, 16a, 20a) artificiels est un superréseau artificiel de Co/Pd qui est formé par dépôt alterné et périodique d'une couche de Co et d'une couche de Pd l'une sur l'autre, et
ledit film (12b, 16b, 20b) métallique mince est sélectionné dans le groupe constitué par des films minces de Pt, de Pd et de Co,
dans lequel l'épaisseur de chaque couche de Co dudit superréseau (12a, 16a, 20a) artificiel est dans la gamme de 0,1 nm à 1,5 nm inclus, et l'épaisseur de chaque couche de Pd dudit superréseau (12a, 16a, 20a) artificiel est dans la gamme de 0,2 nm à 3 nm inclus, et
dans lequel chaque film (12b, 16b, 20b) métallique mince est plus épais que chaque couche de Co dudit superréseau (12a, 16a, 20a) artificiel et est plus épais que chaque couche de Pd dudit superréseau (12a, 16a, 20a) artificiel.

5. Support d'enregistrement magnétique selon la revendication 4, caractérisé en ce que l'épaisseur de chaque film (12b, 16b, 20b) métallique mince est dans la gamme de 1 nm à 100 nm inclus.

6. Support d'enregistrement magnétique selon la revendication 5, caractérisé en ce que ledit film métallique mince (12b, 16b, 20b) est un film mince de Pt dont l'épaisseur est dans la gamme de 15 nm à 100 nm inclus, ou est un film mince de Pd dont l'épaisseur est dans la gamme de 15 nm à 100 nm inclus, ou est un film mince de Co dont l'épaisseur est dans la gamme de 10 nm à 100 nm inclus.
